# EUROPÄISCHE PATENTSCHRIFT

(11) **EP 0 436 485 B1**
(45) Veröffentlichungstag und Bekanntmachung des Hinweises auf die Patenterteilung: **31.08.1994**
(21) Anmeldenummer: 90890323.0
(22) Anmeldetag: 14.12.1990
(51) Int. Cl.: C09D 161/20, C09D 161/24

(54) **Verfahren zur beschleunigten Aushärtung von Aminoplastleimen und damit hergestellte Holzwerkstoffe**
Method for accelerating the hardening of aminoplast adhesives and wooden products using the same
Procédé pour accélérer le durcissement de colles aminoplastes utilisées dans des matériaux à base de bois

(30) Priorität: 15.12.1989 AT 2855/89
(43) Veröffentlichungstag der Anmeldung: 10.07.1991
(73) Patentinhaber: Krems Chemie Aktiengesellschaft, A-3500 Krems (AT)
(72) Erfinder: Dunky, Manfred, Dipl.-Ing. Dr., A-1180 Wien (AT)
(74) Vertreter: Pfeifer, Otto, Dipl.-Ing.

(56) Entgegenhaltungen:
- EP-A- 0 013 447
- FR-A- 2 332 859
- US-A- 3 957 431
- CHEMICAL ABSTRACTS, vol. 104, no. 10, 10. März 1986, Columbus, Ohio, US; abstract no. 69836K; DUNKY, M.: "Urea-formaldehyde adhesives: effects of molar ratio on the properties of adhesives and the obtainable bond strength in gluing of plywood", Seite 45, Spalte 2

## Beschreibung

Die vorliegende Erfindung bezieht sich auf ein Verfahren zur beschleunigten Aushärtung von Aminoplastleimen, insbesondere bei der Herstellung von Holzspanplatten oder anderen Holzwerkstoffen. Es wird ein neuartiges Beschleuniger/Fänger-System zur Verwendung bei der Aushärtung von Aminoplasten beschrieben, welches die erfindungsgemäßen Vorteile einer starken Beschleunigung des Bindemittels bei seiner Aushärtung unter Druck und Temperatur in der Heißpresse sowie einer Erniedrigung der nachträglichen Formaldehydabgabe bietet.

Holzspanplatten werden üblicherweise und in bekannter Technologie dadurch hergestellt, daß mit geeigneten Bindemitteln besprühte oder versetzte Späne zu einem losen Kuchen geschüttet werden und sodann unter Einfluß von Druck und Temperatur verpreßt werden. Durch die Zugabe eines sogenannten Härters, das sind Substanzen, die während der Heißpressung eine chemische Aushärtung des Leimharzes ermöglichen, werden die Späne miteinander verbunden und so die Gebrauchseigenschaften der Platte erzielt. Es ist Aufgabe des Härters, innerhalb der zur Verfügung stehenden Preßzeit eine ausreichende Härtung des Aminoplastharzes herbeizuführen. Härter dieser Art, wie sie allgemein verwendet werden, sind z.B. Ammoniumsalze von mineralischen Säuren, insbesondere das Ammoniumchlorid sowie das Ammoniumsulfat. Es ist das Ziel jeder Spanplattenfertigung, die zum Aushärten des Bindemittels erforderliche Zeitspanne innerhalb gewisser technologischer Grenzen, die nicht nur vom Bindemittel vorgegeben sind, möglichst kurz zu halten, um so einer kostengünstigen Fertigung Rechnung zu tragen. Diese Ausführungen gelten sinngemäß auch für andere Holzwerkstoffe wie z.B. Holzspanformteile oder aber insbesondere sogenannte mitteldichte Faserplatten (MDF). Die nachstehenden Angaben sind unter Berücksichtigung spezifischer Eigenarten auch auf solche andere Holzwerkstoffe neben den eigentlichen Holzspanplatten anwendbar.

Zur Herstellung von Spanplatten der Emissionsklasse E1 - das ist die Klasse mit der niedrigsten tolerierten nachträglichen Formaldehydabgabe - ist es erforderlich, durch sorgfältige Wahl der eingesetzten Leimflotten sowie gegebenenfalls durch gezielten Einsatz von Formaldehydfängern, im überwiegenden Fall Harnstoff, die Einhaltung dieser geringen nachträglichen Abgabe von Formaldehyd zu gewährleisten. Diese Fänger können dabei in bekannter Form entweder dem Leim direkt vor der Verarbeitung oder über die Härterlösung oder in einer anderen Art, wie es zum Teil auch in der einschlägigen Patentliteratur beschrieben ist (DOS 25 53 459, DOS 27 40 207, DOS 28 51 589, DOS 28 56 458, DOS 16 53 167, EP 13 447), zudosiert werden.

Die Zugabe solcher Fängersubstanzen führt aber sehr oft zu einer Verringerung der Aushärtungsgeschwindigkeit der Leimflotte. Je formaldehydärmer nun das Aminoplastleimsystem ist, desto entscheidendere Bedeutung kommt dem eingesetzten Härtersystem zu. Als Härter wurde bis vor kurzem vorzugsweise und fast ausschließlich das schon erwähnte Ammoniumchlorid eingesetzt, welches durch seine Reaktion mit dem freien Formaldehyd des Leimes Salzsäure bildet und damit den pH-Wert der Leimflotte in den zur Aushärtung erforderlichen sauren Bereich verschiebt.

Aus Gründen des Umweltschutzes war in der Jüngsten Zeit der Umstieg von Ammoniumchlorid auf andere Härter und Härtersysteme, insbesondere chloridfreie Systeme, erforderlich. Einer der nunmehr häufig eingesetzten Härter ist das ebenfalls bereits erwähnte Ammoniumsulfat. Es zeigte sich jedoch, daß Ammoniumsulfat nicht die gleiche gute Härtungswirkung für Aminoplastharze besitzt wie sie mit Ammoniumchlorid gegeben ist. Auch andere Substanzen wurden als mögliche Härter im Labor- und Betriebsmaßstab probeweise eingesetzt, wiesen aber allesamt den einen oder anderen Nachteil auf und führten zu keiner befriedigenden Lösung des Problems. So ergibt z.B. Ammoniumphosphat, wie in geringem Maße auch Ammoniumsulfat, eine Erhöhung der nachträglichen Formaldehydabgabe, die wiederum durch Zugabe entsprechender Fängerstoffe abzufangen wäre. Eine langsamere Aushärtung bzw. ein nicht so exakter Übergang in den gelartigen ausgehärteten Zustand führt zu einer Verlängerung der erforderlichen Preßzeit und damit zu einem empfindlichen Kapazitätsverlust.

Es hat nicht an Versuchen gefehlt, die Aushärtezeit von Aminoplastleimen, unabhängig vom eingesetzten Härtersystem, zu erniedrigen. Die sogenannte Gelierzeit des Leimes, die ein Maß für diese zur Aushärtung erforderliche Zeitspanne darstellt, kann durch verschiedene Faktoren beeinflußt werden. So ist es beispielsweise möglich, durch eine bestimmte und gezielte Kochweise bei der Herstellung des Aminoplastleimes eine Verkürzung dieser Gelierzeit zu erreichen.

Ebenso wurde versucht, durch die Zugabe von Mischungen von anorganischen Komponenten und organischen Komponenten eine Beschleunigung zu erzielen und gleichzeitig vor allem eine Einsparung an zu dosierendem Leim zu erreichen (DOS 27 45 951).

Erfindungsgemäß wird nun eine Lösung der oben beschriebenen Probleme dadurch erreicht, daß durch Zugabe einer geringen Menge eines hochreaktiven Harnstoff-Formaldehyd-Gemisches zum Leim oder zur Leimflotte die Aushärtegeschwindigkeit so weit erhöht wird, daß auch mit Härtersubstanzen, die zwar den Vorteil haben, chloridfrei zu sein, aber ohne Zugabe des erwähnten Beschleunigers zu einer Verlängerung der erforderlichen Preßzeit führen würden, gearbeitet werden kann. Es hat sich nun auch überraschenderweise gezeigt und stellt einen wesentlichen Inhalt dieser Erfindung dar, daß die durch den Einsatz dieses formaldehydreichen Beschleunigers möglicherweise drohende Erhöhung der nachträglichen Formaldehydabgabe durch die Zugabe von erhöhten Mengen an Fängern vermeidbar ist, ohne daß es zu einer Verlangsamung in der Aushärtung kommt. Es ist auch Zweck dieser Erfindung, die erforderlichen Anteile an Beschleuniger und Fänger so aufeinander abzustimmen, daß ein Optimum im Sinne der technologischen und wirtschaftlichen Bedingungen bei der Herstellung der Spanplatten erzielt wird.

Durch die gezielte Einstellung der optimalen Verarbeitungsparameter wird erreicht, daß keine Verschlechterung der Herstellungsbedingungen für Spanplatten nach den oben beschriebenen Veränderungen auftritt. Die Einhaltung der Vorschriften der niedrigsten Emissionsklasse E1 ist möglich. Es wurde gezeigt, daß bei Einsatz des erfindungsgemäßen Beschleuniger-Fänger-Systems auch bei technologisch aufwendigen Herstellungsverfahren für Holzspanplatten, wie sie z.B. verschiedene kontinuierliche Verfahren darstellen, eine gleichmäßige und gesicherte Produktion mit chloridfreien Härtersystemen möglich ist.

### Beispiel 1:

Es wird die erfindungsgemäße beschleunigende Wirkung des Harnstoff-Formaldehyd-Gemisches durch Bestimmung der Heißgelierzeit der Flotte bei 100° C gezeigt. Der Aminoplastleim (nachstehend als UF-Leim bezeichnet) ist ein unverstärktes UF-Kondensat mit einem molaren Verhältnis Harnstoff:Formaldehyd = 1:1,11.

Das molare Verhältnis des Formaldehyd-Harnstoff-Gemisches beträgt 1:4,5. Alle Mengenangaben sind Massenteile.

| | Flotte I Vergleichsbeispiel | Flotte II | Flotte III | Flotte IV |
|---|---|---|---|---|
| UF-Leim | 100 | 100 | 100 | 100 |
| Beschleuniger | --- | 1,25 | 2,50 | 5,0 |
| Wasser | 10 | 10 | 10 | 10 |
| Härterlösung (*) | 10 | 10 | 10 | 10 |
| Heißgelierzeit (s) (**) | 46 | 40 | 35 | 26 |

| | | | | |
|---|---|---|---|---|
| (*) Härterlösung: 20 massenprozentige Ammonsulfatlösung in Wasser | | | | |
| (**) Zur Bestimmung der Heißgelierzeit werden 2 ml der fertig gemischten Flotte in eine Eprouvette gegeben und bei 100° C (kochendes Wasserbad) unter ständigem Rühren mit einem Glasstab ausgehärtet. Gemessen wird die Zeit vom Eintauchen der Eprouvette bis zum Gelieren der Leimflotte. | | | | |

Durch die erfindungsgemäße Zugabe des Beschleunigers wird eine deutliche Verkürzung der Heißgelierzeit des Aminoplastleimes erreicht.

### Beispiel 2:

Es werden die Heißgelierzeiten von Flotten ohne Zugabe des erfindungsgemäßen Beschleunigers sowie mit Zugabe des Beschleunigers und gleichzeitiger Dosierung eines Fängers verglichen. Als Fänger wird Harnstoff eingesetzt, der Aminoplastleim ist wieder ein unverstärktes UF-Kondensat mit einem molaren Verhältnis Harnstoff:Formaldehyd = 1:1,11. Der Beschleuniger ist identisch mit dem in Beispiel 1 eingesetzten.

Alle Mengenangaben sind Massenteile.

| | Flotte I Vergleichsbeispiel | Flotte V |
|---|---|---|
| UF-Leim | 100 | 100 |
| Beschleuniger | --- | 2,5 |
| Wasser | 10 | 10 |
| Härterlösung (*) | 10 | 10 |
| Fänger | -- | 2 |
| Rechnerisches molares Verhältnis von Harnstoff:Formaldehyd in der Flotte | 1:1,11 | 1:1,11 |
| Heißgelierzeit (s) (**) | 46 | 36 |

| | | |
|---|---|---|
| (*) s. Beispiel 1 | | |
| (**) s. Beispiel 1 | | |

Durch die Zugabe des Fängers wird die Gelierzeit nur unwesentlich beeinflußt, die beschleunigende Wirkung im Vergleich zur Flotte ohne Beschleuniger bleibt erhalten.

### Beispiel 3:

Es werden Laborspanplatten unter erfindungsgemäßer Zugabe von Beschleuniger und Fänger gepreßt und hinsichtlich der erzielbaren Querzugfestigkeiten und der nachträglichen Formaldehydabgabe geprüft. Als Bindemittel werden die oben beschriebenen Flotten I und V eingesetzt. Es werden einschichtige Platten bei einer Preßtemperatur von 190° C und spezifischen Preßzeiten von 9 s/mm (Flotte I) bzw. 8,6 s/mm (Flotte V) hergestellt, wobei 2440 g Mittelschichtspäne aus industrieller Produktion mit 298,3 g der Flotte I bzw. 309,5 g der Flotte V besprüht werden. Die Sprühdauer beträgt ca. 120 s, die Wartezeit bis zum Verpressen der Platten 15 Minuten. Pro Platte werden 1150 g beleimter Späne eingesetzt. Der rechnerische Beleimungsgrad ohne Berücksichtigung des zugegebenen Beschleunigers bzw. Fängers beträgt 6,9 % Festharz/atro Span. Berücksichtigt man bei Flotte V den Beschleuniger sowie den zugegebenen Harnstoff als Festharz, ergibt sich eine Beleimung von 7,9 % Festharz/atro Span.

| | Flotte I Vergleichsbeispiel | Flotte V |
|---|---|---|
| Dichte (kg/m³) | 613 | 610 |
| Querzugfestigkeit (N/mm²) | 0,44 | 0,46 |

| Nachträgliche Formaldehydabgabe bestimmt nach der Perforatormethode nach DIN EN 120 | | |
|---|---|---|
| photometrisch | 8,4 | 8,8 |
| jodometrisch | 8,9 | 9,3 |

Die nachträgliche Formaldehydabgabe wird durch die erfindungsgemäße Zugabe des beschriebenen Beschleuniger/Fänger-Systems nur unwesentlich beeinflußt.

### Beispiel 4:

Es werden MDF-Platten in einer MDF-Technikumsanlage unter erfindungsgemäßer Zugabe des Beschleunigers und eines Fängers hergestellt. Als Bindemittel wird ein speziell kondensierter UF-MDF-Leim mit einem molaren Verhältnis Harnstoff:Formaldehyd = 1:1,07 eingesetzt. Der Beschleuniger ist identisch mit dem in Beispiel 1 eingesetzten.

Die beiden folgenden Flotten kamen zur Anwendung (alle Mengenangaben in Massenteilen):

| | Flotte VI Vergleichsbeispiel | Flotte VII |
|---|---|---|
| MDF-Leim | 100 | 100 |
| Beschleuniger | --- | 2,5 |
| Wasser | 7,5 | 7,5 |
| Härterlösung (*) | 3,5 | 3,5 |
| Fänger | --- | 2 |
| Rechnerisches molares Verhältnis von Harnstoff:Formaldehyd in der Flotte | 1:1,07 | 1:1,07 |
| Heißgelierzeit (s) (**) | 78 | 72 |

| | | |
|---|---|---|
| (*) siehe Beispiel 1 | | |
| (**) siehe Beispiel 1 | | |

Folgende Preßbedingungen wurden eingehalten: Preßtemperatur 190° C; spezifische Preßzeit 12 s/mm; rechnerischer Beleimungsgrad bei Flotte VI: 11,0 % Festharz/atro Faser; rechnerischer Beleimungsgrad bei Flotte VII unter Berücksichtigung von Beschleuniger und Fänger als Festharz: 11,7 % Festharz/atro Faser.

| | Flotte VI Vergleichsbeispiel | Flotte VII |
|---|---|---|
| Dichte (kg/m³) | 722 | 719 |
| Querzugfestigkeit (N/mm²) | 0,65 | 0,73 |

| Nachträgliche Formaldehydabgabe bestimmt nach der Perforatormethode DIN EN 120 | | |
|---|---|---|
| photometrisch | 8,6 | 8,7 |
| jodometrisch | 9,4 | 9,5 |

Die Festigkeit der Platte mit Flotte VII liegt deutlich höher als die der Platte mit Flotte VI, der Perforatorwert bleibt hingegen durch die Zugabe des Fängers praktisch gleich.

## Patentansprüche

1. Verfahren zur Beschleunigung des Aushärtens von Aminoplastleimen unter Einsatz von Härtern, insbesondere bei der Herstellung von Holzwerkstoffen, dadurch gekennzeichnet, daß dem Leim bzw. der Leimflotte 0,1 bis 5 Massenprozent, bezogen auf Flüssigleim, eines Harnstoff-Formaldehyd-Gemisches mit einem molaren Verhältnis von Harnstoff:Formaldehyd von 1:3 bis 1:6 als Beschleuniger zugesetzt werden.

2. Verfahren nach Anspruch 1, dadurch gekennzeichnet, daß zur Erniedrigung der nachträglichen Formaldehydabgabe zusätzlich Harnstoff als Formaldehydfänger zugesetzt wird.

3. Verfahren nach Anspruch 1, dadurch gekennzeichnet, daß das molare Verhältnis von Harnstoff:Formaldehyd im Beschleuniger von 1:4 bis 1:5, insbesondere 1:4,5 beträgt.

4. Verfahren nach Anspruch 1, dadurch gekennzeichnet, daß die Dosierung des Beschleunigers 0,5 bis 2,5 Massenprozent, bezogen auf Flüssigleim, beträgt.

5. Verfahren nach Anspruch 4, dadurch gekennzeichnet, daß die Dosierung 1,0 bis 1,5 Massenprozent, bezogen auf Flüssigleim, beträgt.

6. Verfahren nach einem der Anhsprüche 1 bis 5, dadurch gekennzeichnet, daß die Dosierung des Beschleunigers entweder zum Leim bzw. zur Leimflotte erfolgt oder der Beschleuniger kurz vor dem Beleimungsmischer zum Leim oder zur Leimflotte oder zur bereits mit Härter vermischten Leimflotte zudosiert wird.

7. Verfahren nach einem der Ansprüche 2 bis 6, dadurch gekennzeichnet, daß die Dosierung des Fängers zum Leim oder zur Leimflotte im Dosiergefäß erfolgt oder der Fänger als wäßrige Lösung knapp vor dem Beleimungsmischer zum Leim oder zur Leimflotte oder zur bereits mit Härter vermischten Leimflotte zudosiert wird.

8. Verfahren nach einem der Ansprüche 2 bis 7, dadurch gekennzeichnet, daß die Dosierung des Fängers bis zu 10 Massenprozent, bezogen auf den flüssigen Leim, beträgt.

9. Verwendung eines nach den Ansprüchen 1 bis 8 beschleunigt aushärtenden Aminoplastleimes zur Herstellung von Holzwerkstoffen.

10. Verwendung nach Anspruch 9 zur Herstellung von aus Lignicellulose enthaltendem Material in Form von Spänen oder Fasern oder anderen Partikeln unterschiedlicher Größe bestehenden Holzwerkstoffen, wie Holzspanplatten oder Holzspanformteile, insbesondere von mitteldichten Faserplatten (MDF).

## Claims

1. Method for accelerating the hardening of aminoplastic glues using hardeners, in particular in the manufacture of timber products, characterised in that 0.1 to 5 weight per cent, referred to liquid glue, of a urea-formaldehyde mixture with a molar ratio of urea to formaldehyde of 1:3 to 1:6 are added as accelerator to the glue or glue liquor.

2. Method according to claim 1, characterised in that to lower the subsequent release of formaldehyde, urea is added in addition as a formaldehyde absorber.

3. Method according to claim 1, characterised in that the molar ratio of urea to formaldehyde in the accelerator is from 1:4 to 1:5, in particular 1:4.5.

4. Method according to claim 1, characterised in that the dosage of accelerator is 0.5 to 2.5 weight per cent, referred to liquid glue.

5. Method according to claim 4, characterised in that the dosage is 1.0 to 1.5 weight per cent, referred to liquid glue.

6. Method according to any of claims 1 to 5, characterised in that the apportioning of accelerator is carried out either to the glue or to the glue liquor, or the accelerator shortly before the glue coating mixer is apportioned to the glue or to the glue liquor or to the glue liquor already mixed with hardener.

7. Method according to any of claims 2 to 6, characterised in that the apportioning of absorber is carried out to the glue or to the glue liquor in the apportioning vessel, or the absorber as an aqueous solution just before the glue coating mixer is apportioned to the glue or to the glue liquor or to the glue liquor already mixed with hardener.

8. Method according to any of claims 2 to 7, characterised in that the dosage of absorber is up to 10 weight per cent, referred to the liquid glue.

9. Use of an aminoplastic glue with accelerated hardening according to claims 1 to 8 for the manufacture of timber products.

10. Use according to claim 9 for the manufacture of timber products consisting of lignicellulose-containing material in the form of chips or fibres or other particles of different size, such as wood chipboard or wood chip moulded articles, in particular medium-density fibreboard (MDF).

## Revendications

1. Procédé pour accélérer le durcissement de colles aminoplastes par introduction de durcisseurs, en particulier pour la préparation de matériaux en bois modifié, caractérisé en ce que l'on ajoute à la colle ou à la solution de colle, 0,1 à 5% en poids, sur base de la colle liquide, d'un mélange d'urée et de formaldéhyde avec un rapport molaire d'urée:formaldéhyde de 1:3 à 1:6, comme accélérateur.

2. Procédé suivant la revendication 1, caractérisé en ce que l'on utilise de l'urée supplémentaire comme fixateur de formaldéhyde pour abaisser le dégagement ultérieur de formaldéhyde.

3. Procédé suivant la revendication 1, caractérisé en ce que le rapport molaire d'urée:formaldéhyde dans l'accélérateur s'élève de 1:4 à 1:5, en particulier à 1:4,5.

4. Procédé suivant la revendication 1, caractérisé en ce que le dosage de l'accélérateur s'élève de 0,5 à 2,5% en poids, par rapport à la colle liquide.

5. Procédé suivant la revendication 4, caractérisé en ce que le dosage s'élève de 1,0 à 1,5% en poids, par rapport à la colle liquide.

6. Procédé suivant l'une quelconque des revendications 1 à 5, caractérisé en ce que le dosage de l'accélérateur est soit réalisé dans la colle ou la solution de colle, soit l'accélérateur est ajouté à la colle ou à la solution de colle peu avant le mélangeur d'encollage, soit l'accélérateur est ajouté lors du mélange du durcisseur à la solution de colle.

7. Procédé suivant l'une quelconque des revendications 2 à 6, caractérisé en ce que le dosage du fixateur est soit réalisé dans la colle ou dans la solution de colle dans le récipient de dosage, soit le fixateur sous forme d'une solution aqueuse est ajouté à la colle ou à la solution de colle juste avant le mélangeur d'encollage, soit le fixateur est ajouté lors du mélange du durcisseur à la solution de colle.

8. Procédé suivant l'une quelconque des revendications 2 à 7, caractérisé en ce que le dosage du fixateur atteint jusqu'à 10% en masse, sur base de la colle liquide.

9. Utilisation d'une colle aminoplaste à durcissement accéléré suivant l'une quelconque des revendications 1 à 8, pour la préparation de matériaux en bois modifié.

10. Utilisation suivant la revendication 9, pour la préparation de matériaux en bois modifié en matières contenant de la lignicellulose, sous forme de copeaux ou de fibres ou autres particules de tailles différentes, à savoir des panneaux de copeaux de bois ou les matières composées de copeaux de bois, en particulier des plaques de fibres agglomérées d'épaisseur moyenne (MDF).
